# EUROPÄISCHE PATENTSCHRIFT

(11) **EP 1 379 137 B1**
(45) Veröffentlichungstag und Bekanntmachung des Hinweises auf die Patenterteilung: **16.08.2006**
(21) Anmeldenummer: 02745202.8
(22) Anmeldetag: 02.04.2002
(51) Int. Cl.: A01N 51/00, A01N 47/40, A01N 25/30, A01N 43/40

(54) **VERWENDUNG VON FETTALKOHOLETHOXYLATEN ALS PENETRATIONSFÖRDERER**
USE OF FATTY ALCOHOL ETHOXYLATES AS PENETRATION PROMOTERS
UTILISATION D'ETHOXYLATES D'ALCOOLS GRAS EN TANT QUE PROMOTEURS DE PENETRATION

(30) Priorität: 11.04.2001 DE 10118076
(43) Veröffentlichungstag der Anmeldung: 14.01.2004
(73) Patentinhaber: Bayer CropScience AG, 40789 Monheim (DE)
(72) Erfinder: ROSENFELDT, Frank, 40764 Langenfeld (DE); BAUR, Peter, 65817 Eppstein (DE)
(86) Internationale Anmeldenummer: PCT/EP2002/003618
(87) Internationale Veröffentlichungsnummer: WO 2002/098230

(56) Entgegenhaltungen:
- EP-A- 0 579 052
- EP-A- 0 596 316
- WO-A-97/25863
- WO-A-97/49284
- DATABASE BIOSIS [Online] BIOSCIENCES INFORMATION SERVICE, PHILADELPHIA, PA, US; Mai 2000 (2000-05) SCHOENHERR J ET AL: "Rates of cuticular penetration of 1-naphthylacetic acid (NAA) as affected by adjuvants, temperature, humidity and water quality." Database accession no. PREV200000276498 XP002214092 & PLANT GROWTH REGULATION, Bd. 31, Nr. 1-2, Mai 2000 (2000-05), Seiten 61-74, ISSN: 0167-6903
- DATABASE BIOSIS [Online] BIOSCIENCES INFORMATION SERVICE, PHILADELPHIA, PA, US; Februar 1999 (1999-02) BAUR PETER: "Surfactant effects on cuticular penetration of neutral polar compounds: Dependence on humidity and temperature." Database accession no. PREV199900143947 XP002214093 & JOURNAL OF AGRICULTURAL AND FOOD CHEMISTRY, Bd. 47, Nr. 2, Februar 1999 (1999-02), Seiten 753-761, ISSN: 0021-8561
- DATABASE BIOSIS [Online] BIOSCIENCES INFORMATION SERVICE, PHILADELPHIA, PA, US; Juli 1997 (1997-07) BAUR P ET AL: "Penetration of an ethoxylated fatty alcohol surfactant across leaf cuticles as affected by concentration, additives, and humidity." Database accession no. PREV199800088580 XP002214094 & ZEITSCHRIFT FUER PFLANZENKRANKHEITEN UND PFLANZENSCHUTZ, Bd. 104, Nr. 4, Juli 1997 (1997-07), Seiten 380-393, ISSN: 0340-8159
- DATABASE CA [Online] CHEMICAL ABSTRACTS SERVICE, COLUMBUS, OHIO, US; retrieved from STN-INTERNATIONAL Database accession no. 133:248388 CA XP002214095 & CN 1 245 643 A (PESTICIDE FORMULATIONS ENGINEERING TECHNOLOGY CENTER) 1. März 2000 (2000-03-01)
- DATABASE CA [Online] CHEMICAL ABSTRACTS SERVICE, COLUMBUS, OHIO, US; retrieved from STN-INTERNATIONAL Database accession no. 133:204213 CA XP002214096 & CN 1 242 940 A (PEOP.REP.CHINA) 2. Februar 2000 (2000-02-02)

## Beschreibung

Die vorliegende Erfindung betrifft die neue Verwendung von Fettalkoholethoxylaten als Penetrationsförderer für bestimmte Wirkstoffe mit insektiziden Eigenschaften.

Es ist allgemein bekannt, dass viele agrochemische Wirkstoffe, insbesondere solche mit systemischer Wirkung, in die Pflanze penetrieren müssen, damit sie ihre Aktivität gleichmäßig in der ganzen Pflanze entfalten können. So muß bei der Wirkstoffaufnahme über die Blätter die Penetrationsbarriere der Cuticula von den Wirkstoffen überwunden werden. Außerdem ist es wichtig, dass die agrochemischen Wirkstoffe schnell und über eine möglichst große Oberfläche verteilt in die Pflanze eindringen, da sonst die Gefahr besteht, dass die aktiven Komponenten durch Regen abgewaschen werden.

Weiterhin ist allgemein bekannt, dass manche in Pflanzenschutzmitteln verwendeten Additive, wie zum Beispiel Tenside, Mineralöle und Pflanzenöle, das Eindringen von agrochemischen Wirkstoffen in die Pflanze fördern und dadurch die Aktivität der Wirkstoffe steigem können. Die Additive können im Einzelfall die Benetzbarkeit verstärken, eine bessere Verteilung des Spritzbelages auf der Oberfläche (= Spreitung) der Pflanze herbeiführen, die Verfügbarkeit des Wirkstoffes im eingetrockneten Spritzrückstand durch sogenanntes Anlösen erhöhen oder direkt die Penetration des Wirkstoffes durch die Cuticula fördern. Die Additive werden dabei entweder direkt in die Formulierung eingebaut, - was nur zu einem begrenzten Prozentsatz möglich ist -, oder aber im Tankmixverfahren der jeweiligen Spritzbrühe zugefügt.

Ferner ist schon bekannt, dass sich Fettalkoholethoxylate als Penetrationsförderer für zahlreiche agrochemische Wirkstoffe verwenden lassen (vgl. EP-A 0 579 052 und Recent Res. Devel. in Agricultural & Food Chem. 2 (1998), 809-837). Nachteilig ist aber, dass der gewünschte Effekt nur dann beobachtet wird, wenn die eingesetzte Formulierung einen relativ hohen Gehalt an Fettalkoholethoxylat aufweist.

Es wurde nun gefunden, dass sich Fettalkoholethoxylate der Formel 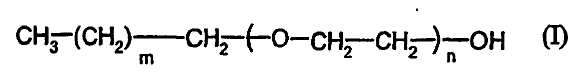 in welcher
- m: für Durchschnittswerte zwischen 8,0 und 13,0 steht und
- n: für Durchschnittswerte zwischen 6,0 und 17,0 steht,
als Penetrationsförderer für insektizide Wirkstoffe aus der Gruppe der Neonicotinyle verwenden lassen, wenn sie in handelsüblichen Formulierungen in Konzentrationen zwischen 0,1 und 30 Gew.-% enthalten sind, wobei das Gewichtsverhältnis von insektizidem Wirkstoff aus der Gruppe der Neonicotinyle zu Fettalkoholethoxylat der Formel (I) zwischen 1:0,1 und 1:2,0 liegt.

Die Erfindung betrifft daher den Einsatz von Fettalkoholethoxylaten der Formel (I) für den angegebenen Zweck. Außerdem betrifft die Erfindung Pflanzenbehandlungsmittel, die
- zwischen 0,1 und 30 Gew.-% an Fettalkoholethoxylat der Formel (I),
- zwischen 1 und 50 Gew.-% an Wirkstoff aus der Gruppe der Neonicotinyle,
- zwischen 1 und 80 Gew.-% an Dimethylsulfoxid, N-Methylpyrrolidon und/oder Butyrolacton, sowie
- zwischen 0 und 20 Gew.-% an Zusatzstoffen
enthalten, wobei das Gewichtsverhältnis von Wirkstoff zu Fettalkoholethoxylat der Formel (I) zwischen 1:0,1 und 1:2,0 liegt.

Es ist als äußerst überraschend zu bezeichnen, dass Fettalkoholethoxylate der Formel (I) wesentlich besser als Penetrationsförderer für insektizid wirksame Neonicotinyle geeignet sind als vergleichbare Stoffe, die für den gleichen Zweck eingesetzt werden. Unerwartet ist auch, dass schon sehr niedrige Konzentrationen an Fettalkoholethoxylat der Formel (I) ausreichen, um den gewünschten Effekt zu erzielen.

Die erfindungsgemäße Verwendung von Fettalkoholethoxylaten der Formel (I) weist eine Reihe von Vorteilen auf. So handelt es sich bei diesen Fettalkoholethoxylaten um Produkte, die problemlos zu handhaben und auch in größeren Mengen verfügbar sind. Außerdem sind sie biologisch abbaubar und ermöglichen eine deutliche Effektivitätssteigerung bei der Applikation von Neonicotinylen.

Die erfindungsgemäß verwendbaren Fettalkoholethoxylate sind durch die Formel (I) allgemein definiert. Bei diesen Fettalkoholethoxylaten handelt es sich im Allgemeinen um Gemische von Stoffen dieses Typs mit unterschiedlichen Kettenlängen. Für die Indices m und n errechnen sich deshalb Durchschnittswerte, die auch von ganzen Zahlen abweichen können.

Bevorzugt verwendbar sind Fettalkoholethoxylate der Formel (I), in denen
- m: für Durchschnittswerte zwischen 9,0 und 12,0 steht und
- n: für Durchschnittswerte zwischen 7,0 und 9,0 steht.

Ganz besonders bevorzugt ist Fettalkoholethoxylat der Formel (I), in welcher
- m: für den Durchschnittswert 10,5 steht und
- n: für den Durchschnittswert 8,4 steht.

Die Fettalkoholethoxylate der Formel (I) und deren Einsatz als oberflächenaktive Stoffe sind bereits bekannt.

Unter insektizid wirksamen Neonicotinylen sind im vorliegenden Zusammenhang vorzugsweise die folgenden Substanzen zu verstehen. 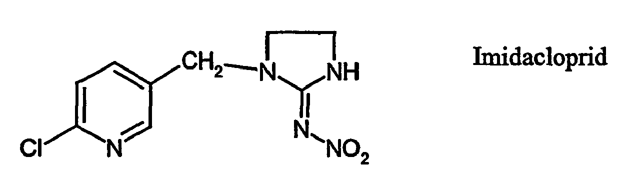 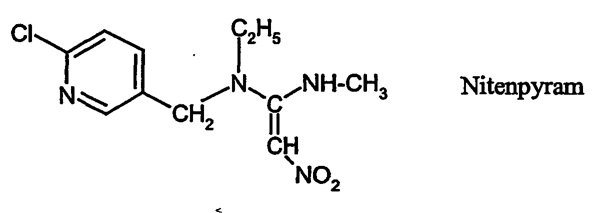 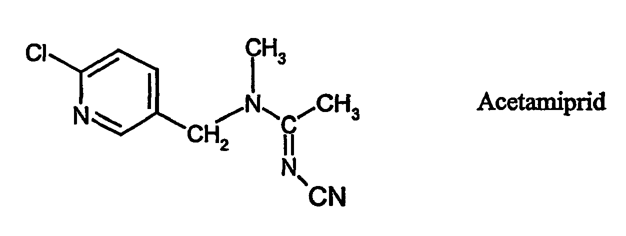 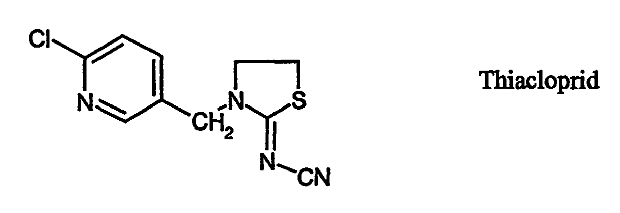 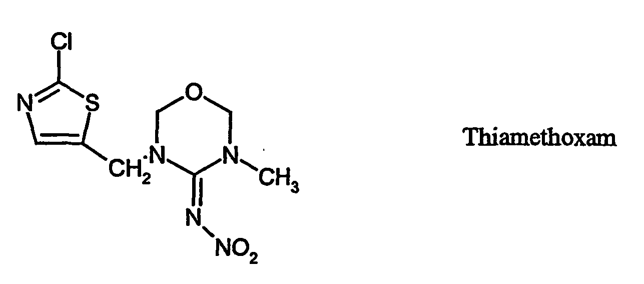 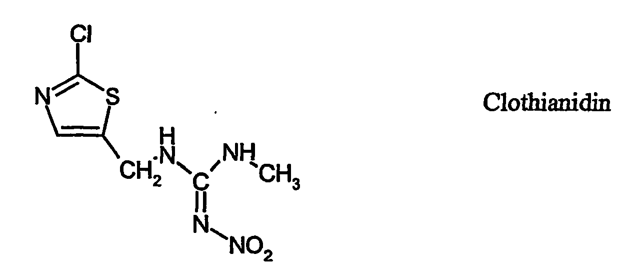 und

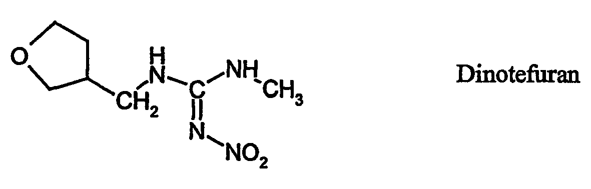

Die zuvor genannten Stoffe und deren Einsatz als Insektizide sind bekannt.

Als Zusatzstoffe, die in den erfindungsgemäßen Pflanzenbehandlungsmitteln enthalten sein können, kommen weitere agrochemische Wirkstoffe sowie Kristallisationsinhibitoren, Netzmittel, Emulgatoren und auch Wasser in Frage.

Dabei kommen als agrochemische Wirkstoffe vorzugsweise Substanzen mit insektiziden, akariziden und/oder fungiziden Eigenschaften in Betracht.

Als Insektizide bzw. Akarizide kommen vorzugsweise Wirkstoffe aus der Gruppe der Pyrethroide oder der Ketoenol-Derivate in Frage. Beispielhaft genannt seien
Cypermethrin,
Deltamethrin,
Permethrin,
natürliches Pyrethrum,
Fenpropathrin,
Cyfluthrin,
β-Cyfluthrin sowie
aus der Gruppe der Ketoenol-Derivate das 3-(2,4-Dichlorphenyl)-4-(1,1-dimethylpropyl-carbonyloxy)-5-spiro-cyclohexyl-3-dihydrofuranon-2 und das 3-(2,4,6-Trimethylphenyl)-4-(2,2-dimethyl-propyl-carbonyloxy)-5-spiro-cyclopentyl-3-dihydrofuranon-2.

Als Fungizide kommen vorzugsweise Wirkstoffe aus der Gruppe der Azole, der Strobilurin-Derivate und der Aminosäure-Derivate in Betracht. Beispielhaft genannt seien
Tebuconazole,
Cyproconazole,
Triadimenol,
Myclobutanil,
Trifloxystrobin,
Azoxystrobin,
Kresoxim-methyl,
Pyraclostrobin,
3-[1-(2-[4-(2-chlorphenoxy)-5-fluorpyrimid-6-yloxy]-phenyl)-1-(methoximino)-methyl]-5,6-dihydro-1,4,2-dioxazin und
Iprovalicarb.

Als Kristallisationsinhibitoren, die in den erfindungsgemäßen Pflanzenbehandlungsmitteln vorhanden sein können, kommen alle üblicherweise für derartige Zwecke in agrochemischen Mitteln einsetzbaren Stoffe in Frage. Vorzugsweise genannt seien N-Alkyl-pyrrolidone, wie N-Octyl-pyrrolidon und N-Dodecylpyrrolidon, ferner Co-Polymerisate von Polyvinyl-pyrrolidon und Polyvinylalkohol, wie zum Beispiel das unter der Bezeichnung Luviskol VA 64 (Fa. BASF) bekannte Polyvinylpyrrolidon / Polyvinylalkohol-Copolymerisat, weiterhin Alkylcarbonsäure-dimethylamide, wie Decansäure-dimethylamid oder das unter der Bezeichnung Hallcomid® (Fa. Hall Comp.) bekannte C₆₋₁₂-Alkancarbonsäure-dimethylamid-Gemisch, und außerdem Co-Polymerisate von Ethylendiamin mit Ethylenoxid und Propylenoxid, wie zum Beispiel das unter der Bezeichnung Synperonic T 304 (Fa. Uniqema) bekannte Produkt.

Als Netzmittel kommen alle üblichen für derartige Zwecke in Pflanzenbehandlungsmitteln einsetzbaren Stoffe in Betracht. Vorzugsweise genannt seien Alkylphenolethoxylate, Dialkylsulfosuccinate, wie Dioctylsulfosuccinat-Natrium, Laurylethersulfate und Polyoxyethylensorbitan-Fettsäureester.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkylammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Alkoholen mit Ethylenoxid im Molverhältnis 1:5 bis 1:50, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C₈₋C₁₂-Alkylphenolen mit Ethylenoxid im Molverhältnis 1:5 bis 1:30, Alkylglykoside, C₈-C₁₆-Alkylbenzol-sulfonsäuresalze, wie z.B. Calcium-, Monoethanolammonium-, Di-ethanolammonium- und Tri-ethanolammonium-Salze.

Als Beispiele für nicht-ionische Emulgatoren seien die unter den Bezeichnungen Pluronic PE 10 100 (Fa. BASF) und Atlox 4913 (Fa. Uniqema) bekannten Produkte genannt. Ferner infrage kommen Tristyryl-phenyl-ethoxylate. Als Beispiele für anionische Emulgatoren seien das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor FLK und Soprophor 4D 384 (Fa. Rhodia) speziell genannt seien.

Bei der erfindungsgemäßen Verwendung von Fettalkoholethoxylaten der Formel (I) kann der Gehalt an diesen Produkten innerhalb eines bestimmten Bereiches variiert werden. Im allgemeinen verwendet man Fettalkoholethoxylate der Formel (I) in einer solchen Menge, dass sie in den handelsüblichen Formulierungen in Konzentrationen zwischen 0,1 und 30 Gew.-%, vorzugsweise zwischen 0,5 und 15 Gew.-% enthalten sind. Das Gewichtsverhältnis von insektizidem Wirkstoff aus der Gruppe der Neonicotinyle zu Fettalkoholethoxylat der Formel (I) wird dabei so gewählt, dass es im allgemeinen zwischen 1:0,1 und 1:2,0, vorzugsweise zwischen 1:0,2 und 1:0,5 liegt.

In den erfindungsgemäßen Pflanzenbehandlungsmitteln kann der Gehalt an den einzelnen Komponenten innerhalb eines bestimmten Bereiches variiert werden. Bevorzugt sind diejenigen Pflanzenbehandlungsmittel, in denen die Konzentrationen
- an Fettalkoholethoxylat der Formel (I) zwischen 0,5 und 15 Gew.-%,
- an Wirkstoff aus der Gruppe der Neonicotinyle zwischen 2,5 und 30 Gew.-%,
- an Dimethylsulfoxid, N-Methylpyrrolidon und/oder Butyrolacton zwischen 30 und 80 Gew.-% und
- an Zusatzstoffen zwischen 0 und 15 Gew.-%
betragen.

Handelt es sich bei den erfindungsgemäßen Pflanzenbehandlungsmitteln um anwendungsfertige Produkte, so sind diejenigen bevorzugt, in denen der Gehalt
- an Fettalkoholethoxylat der Formel (I) zwischen 0,01 und 0,2 Gew.-%,
- an Wirkstoff aus der Gruppe der Neonicotinyle zwischen 0,001 und 0,03 Gew.-%,
- an Dimethylsulfoxid, N-Methylpyrrolidon und/oder Butyrolacton zwischen 0 und 50 Gew.-% und
- an Zusatzstoffen zwischen 0 und 95 Gew.-%
liegt, wobei das Gewischtsverhältnis von Wirkstoff zu Fettalkoholethoxylat der Formel (I) zwischen 1:0,1 und 1:2,0 liegt.

Die Herstellung der erfindungsgemäßen Pflanzenbehandlungsmittel erfolgt in der Weise, dass man die Komponenten in den jeweils gewünschten Verhältnissen miteinander vermischt. Im allgemeinen geht man so vor, dass man einen Wirkstoff aus der Gruppe der Neonicotinyle vorlegt und dann unter Rühren die übrigen Bestandteile in beliebiger Reihenfolge hinzufügt.

Die Temperaturen können bei der Herstellung der erfindungsgemäßen Pflanzenbehandlungsmittel in einem bestimmten Bereich variiert werden. Man arbeitet im allgemeinen bei Temperaturen zwischen 10°C und 50°C, vorzugsweise bei Raumtemperatur.

Für die Herstellung der erfindungsgemäßen Pflanzenbehandlungsmittel kommen übliche Geräte in Betracht, die zur Zubereitung von agrochemischen Formulierungen eingesetzt werden.

Die erfindungsgemäßen Pflanzenbehandlungsmittel können entweder als solche oder nach vorherigem Verdünnen mit Wasser oder anderen Verdünnungsmitteln ausgebracht werden, also zum Beispiel als Emulsionen, Suspensionen, Lösungen oder Aerosole. Die Anwendung erfolgt dabei nach üblichen Methoden, also zum Beispiel durch Spritzen, Gießen, Sprühen, Injizieren oder Streichen.

Die Aufwandmenge an den erfindungsgemäßen Pflanzenbehandlungsmitteln kann innerhalb eines größeren Bereiches variiert werden. Sie richtet sich nach den jeweils enthaltenen Wirkstoffen und nach deren Konzentration in den Formulierungen.

Mit Hilfe der erfindungsgemäßen Pflanzenbehandlungsmittel lassen sich Neonicotinyle in besonders vorteilhafter Weise auf die Pflanzen und/oder deren Lebensraum ausbringen. Dabei wird die Kristallisationsneigung fester Wirkstoffe herabgesetzt, das Penetrationsvermögen der Wirkstoffe begünstigt und die biologische Wirksamkeit der aktiven Komponenten im Vergleich zu herkömmlichen Formulierungen gesteigert.

Die Erfindung wird durch die folgenden Beispiele veranschaulicht.

### Herstellungsbeispiele

### Beispiel 1

Zur Herstellung einer Formulierung werden
- 20 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10 g: des unter der Bezeichnung Genapol C-100 (Fa. Clariant) bekannten Fettalkoholethoxylates der Formel (I), in welcher
m für den Durchschnittswert 10,5 steht und
n für den Durchschnittswert 8,4 steht, und
- 65 g: N-Methyl-pyrrolidon
versetzt. Nach beendeter Zugabe wird noch 5 Minuten bei Raumtemperatur nachgerührt. Man erhält auf diese Weise eine homogene Flüssigkeit

### Beispiel 2

Zur Herstellung einer Formulierung werden
- 7 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10 g: des unter der Bezeichnung Genapol C-100 (Fa. Clariant) bekannten Fettalkoholethoxylates der Formel (I), in welcher
m für den Durchschnittswert 10,5 steht und
n für den Durchschnittswert 8,4 steht,
- 2,5 g: Cyßuthrin und
- 75,5 g: N-Methylpyrrolidon
versetzt. Nach beendeter Zugabe wird noch 5 Minuten bei Raumtemperatur nachgerührt. Man erhält auf diese Weise eine homogene Flüssigkeit.

### Vergleichsbeispiel A

Zur Herstellung einer Formulierung werden
- 20 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10 g: Diethylsebacat,
- 10 g: Rhizinusöl-ethoxylat und
- 55 g: N-Methylpyrrolidon
versetzt. Nach beendeter Zugabe wird noch 5 Minuten bei Raumtemperatur nachgerührt. Man erhält auf diese Weise eine homogene Flüssigkeit.

### Vergleichsbeispiel B

Zur Herstellung einer Formulierung werden
- 20 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10 g: eines Gemisches aus
5 Gew.-% Hexancarbonsäure-dimethylamid,
50 Gew.-% Octancarbonsäure-dimethylamid,
40 Gew.-% Decancarbonsäure-dimethylamid und
5 Gew.-% Dodecansäure-dimethylamid,
- 10 g: Rhizinusöl-ethoxylat und
- 55 g: N-Methylpyrrolidon
versetzt. Nach beendeter Zugabe wird noch 5 Minuten bei Raumtemperatur nachgerührt. Man erhält auf diese Weise eine homogene Flüssigkeit.

### Vergleichsbeispiel C

Zur Herstellung einer Formulierung werden
- 20 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10 g: Polyoxyethylen-sorbitan-Monooleat mit durchschnittlich 20 Oxyethylen-Einheiten pro Molekül,
- 10 g: Rhizinusöl-ethoxylat und
- 55 g: N-Methylpyrrolidon
versetzt. Nach beendeter Zugabe wird noch 5 Minuten bei Raumtemperatur nachgerührt. Man erhält auf diese Weise eine homogene Flüssigkeit.

### Verwendungsbeispiel I

Bestimmung der Penetration von Imidacloprid in Gerstenpflanzen.

### Wirkstoffzubereitung

Zur Herstellung einer anwendungsfertigen Wirkstoffzubereitung wurde jeweils 1 Gewichtsteil der in den zuvor aufgeführten Beispielen angegebenen Formulierungen mit soviel Wasser verdünnt, dass eine Spritzbrühe entstand, die 200 mg Imidacloprid pro Liter enthielt.

### Aufwandmenge

Pro Pflanze wurden jeweils 3 µl an anwendungsfertiger Wirkstoffzubereitung und eine definierte, jeweils identische Menge an radioaktiv markiertem Imidacloprid aufgewandt.

### Pflanzen

Verwendet wurden 14 Tage alte Gerstenpflanzen der Sorte Tapir, die in Vermiculit angezogen worden waren und sich im 2-Blatt-Stadium befanden.

### Auftragsstelle

3 µl an anwendungsfertiger Wirkstoffzubereitung wurden jeweils auf das erste Blatt im Abstand von 5,5 cm zur Blattspitze aufgetragen.

### Versuchsdauer

24 bzw. 48 Stunden zwischen dem Zeitpunkt der Applikation und des Abwaschens.

### Wiederholungen

5 Wiederholungen pro Wirkstoffzubereitung.

### Klima

12 Stunden Licht bei 22-23°C und 55-60 % relativer Luftfeuchtigkeit; 10 Stunden Dunkelheit bei 15°C und 80 % relativer Luftfeuchtigkeit sowie zweimal je 1 Stunde Dämmerlicht bei dem zuvor herschenden Klima.

### Kontrollen

Jeweils 3 µl an anwendungsfertiger Wirkstoffzubereitung wurden direkt in eine Szintillationsflasche pipettiert. Pro Wirkstoffzubereitung wurden 5 Wiederholungen durchgeführt.

### Vorbereitung

Von im Gewächshaus frisch angezogenen Gerstenpflanzen im 2-Blatt-Stadium wurden die zweiten Blätter abgeschnitten. Die verbleibenden Blätter der horizontal platzierten Pflanzen wurden dann mit Hilfe von Objektträgern so fixiert, dass die Auftragsstellen auf den Blättern in einem Bereich von 2 cm nicht verdreht waren. Die anwendungsfertigen Wirkstoffzubereitungen wurden nach ihrer Herstellung 60 Minuten bei Raumtemperatur gerührt.

### Applikation und Aufarbeitung

Jeweils 3 µl Wirkstoffzubereitung wurden mittig auf ein Blatt aufgetragen. Danach wurden die Pflanzen bis zum Eintrocknen der Wirkstoffzubereitung liegen gelassen. Gleichzeitig wurden jeweils 3 µl Wirkstoffzubereitung zur Kontrolle direkt in eine Szintillationsflasche einpipettiert. Von dieser Kontrolle wurden 5 Wiederholungen durchgeführt. Sofort im Anschluß daran wurde mit den übrigen Wirkstoffzubereitungen und Pflanzen ebenso verfahren. Dabei wurde nach der Applikation im Labor eine Temperatur von 21-22°C und eine relative Luftfeuchtigkeit von 70 % aufrecht erhalten.

Nach dem Eintrocknen aller applizierten Wirkstoffzubereitungen wurden die behandelten Pflanzen für 22 bzw. für 46 Stunden in einen Klimaschrank gestellt. 24 bzw. 48 Stunden nach der Applikation der Wirkstoffzubereitungen wurden die Blätter aller Pflanzen wieder mit Objektträgern fixiert. Die Auftragsstelle wurde dann mit 30 µl einer 5 %igen Lösung von Celluloseacetat in Aceton flächendeckend belegt. Nachdem die Lösung vollkommen eingetrocknet war, wurde jeweils der entstandene Celluloseacetat-Film abgenommen und in Szintillationsflaschen gesteckt. Nun wurde der Celluloseacetat-Film mit jeweils 1 ml Aceton versetzt. Die Proben blieben so lange bei Raumtemperatur in geschlossenen Gefäßen stehen, bis die enthaltene Substanz gelöst war. Danach wurden jeweils 2 ml Szintillator hinzugefügt. Die Blattspitzen wurden vorher in einem Stück abgeschnitten und in Papphütchen gesteckt. Die Papphütchen samt Inhalt wurden 16 Stunden bei 50°C getrocknet. Anschließend wurde die Radioaktivität aller Proben nach der Methode der Flüssigkeits- und Verbrennungszintillation gemessen. Aus den erhaltenen Werten wird der prozentuale Anteil der Wirkstoffaufnahme und der Translokation errechnet. Dabei bedeutet 0 %, dass kein Wirkstoff aufgenommen und translokiert wurde, während 100 % bedeutet, dass der Wirkstoff vollständig aufgenommen und translokiert wurde.

Die Versuchsergebnisse gehen aus der folgenden Tabelle hervor.

**Tabelle I**

| Bestimmung der Penetration von Imidacloprid in Gerstenpflanzen | | |
|---|---|---|
| **Formulierung** gemäß Beispiel | **Wirkstoffaufnahme und Translokation in % nach** | |
| | 24 Stunden | 48 Stunden |
| Bekannt: | | |
| (A) | 3,8 | 4,8 |
| (B) | 2,6 | 6,4 |
| (C) | <2 | <5 |

| Erfindungsgemäß: | | |
|---|---|---|
| (1) | 42,7 | 68,6 |

Die Ergebnisse zeigen, dass die erfindungsgemäße Formulierung wesentlich besser penetriert als die zum Vergleich herangezogenen Formulierungen.

## Patentansprüche

1. Verwendung von Fettalkoholethoxylaten der Formel 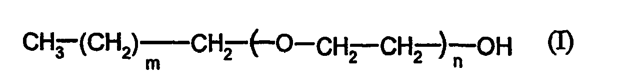 in welcher
m für Durchschnittswerte zwischen 8,0 und 13,0 steht und
n für Durchschnittswerte zwischen 6,0 und 17,0 steht,
als Penetrationsförderer für insektizide Wirkstoffe aus der Gruppe der Neonicotinyle, wobei Fettalkoholethoxylate der Formel (I) in solchen Mengen eingesetzt werden, dass sie in handelsüblichen Formulierungen in Konzentrationen zwischen 0,1 und 30Gew.-% enthalten sind und das Gewichtsverhältnis von insektizidem Wirkstoff aus der Gruppe der Neonicotinyle zu Fettalkoholethoxylat der Formel (I) zwischen 1:0,1 und 1:2,0 liegt.

2. Verwendung gemäß Anspruch 1, **dadurch gekennzeichnet, dass** es sich bei dem Wirkstoff aus der Gruppe der Neonicotinyle um Imidacloprid, Nitenpyram, Acetamiprid, Thiacloprid, Thiamethoxam, Clothianidin oder Dinotefuran handelt.

3. Pflanzenbehandlungsmittel, **gekennzeichnet durch** einen Gehalt
- zwischen 0,1 und 30 Gew.-% an Fettalkoholethoxylat der Formel (I), 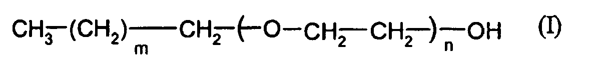
in welcher
m für Durchschnittswerte zwischen 8,0 und 13,0 steht und
n für Durchschnittswerte zwischen 6,0 und 17,0 steht,
- zwischen 1 und 50 Gew.-% an Wirkstoff aus der Gruppe der Neonicotinyle,
- zwischen 1 und 80 Gew.-% an Dimethylsulfoxid, N-Methylpyrrolidon und/oder Butyrolacton, sowie
- zwischen 0 und 20 Gew.-% an Zusatzstoffen,
wobei das Gewichtsverhältnis von Wirkstoff zu Fettalkoholethoxylat der Formel (I) zwischen 1:0,1 und 1:2,0 liegt.

4. Pflanzenbehandlungsmittel gemäß Anspruch 3, **dadurch gekennzeichnet, dass** Fettalkoholethoxylat der Formel (I) enthalten ist, in welcher
m für Durchschnittswerte zwischen 9,0 und 12,0 steht und
n für Durchschnittswerte zwischen 7,0 und 9,0 steht.

5. Pflanzenbehandlungsmittel gemäß Anspruch 3, **dadurch gekennzeichnet, dass** Fettalkoholethoxylat der Formel (I) enthalten ist,
in welcher
m für den Durchschnittswert 10,5 steht und
n für den Durchschnittswert 8,4 steht.

6. Pflanzenbehandlungsmittel gemäß Anspruch 3, **dadurch gekennzeichnet, dass** Imidacloprid, Nitenpyram, Acetamiprid, Thiacloprid, Thiamethoxam, Clothianidin oder Dinotefuran als Neonicotinyl enthalten ist.

7. Pflanzenbehandlungsmittel gemäß Anspruch 3, **dadurch gekennzeichnet, dass** agrochemische Wirkstoffe, Kristallisationshemmer, Netzmittel, Emulgatoren und/oder Wasser als Zusatzstoffe enthalten sind.

8. Pflanzenbehandlungsmittel gemäß Anspruch 3, **dadurch gekennzeichnet, dass** der Gehalt
- an Fettalkoholethoxylat der Formel (I) zwischen 0,5 und 15 Gew.-%,
- an Wirkstoff aus der Gruppe der Neonicotinyle zwischen 2,5 und 30 Gew.-%,
- an Dimethylsulfoxid, N-Methylpyrrolidon und/oder Butyrolacton zwischen 30 und 80 Gew.-% und
- an Zusatzstoffen zwischen 0 und 15 Gew.-%
liegt.

9. Anwendungsfertige Pflanzenbehandlungsmittel, **gekennzeichnet durch** einen Gehalt
- zwischen 0,01 und 0,2 Gew.% an Fettalkoholethoxylat der Formel 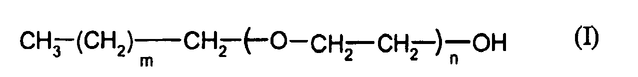 in welcher
m für Durchschnittswerte zwischen 8,0 und 13,0 steht und
n für Durchschnittswerte zwischen 6,0 und 17,0 steht,
- an Wirkstoff aus der Gruppe der Neonicotinyle zwischen 0,001 und 0,03 Gew.-%,
- an Dimethylsulfoxid, N-Methylpyrrolidon und/oder Butyrolacton zwischen 0 und 50 Gew.-% und
- an Zusatzstoffen zwischen 0 und 95 Gew.-%,
wobei das Gewichtsverhältnis von Wirkstoff zu Fettalkoholethoxylat der Formel (I) zwischen 1:0,1 und 1:2,0 liegt.

## Claims

1. Use of fatty alcohol ethoxylates of the formula 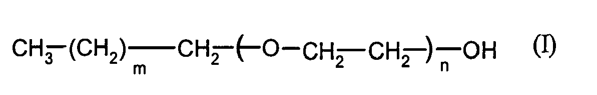 in which
m represents average values from 8.0 to 13.0 and
n represents average values from 6.0 to 17.0
as penetrants for insecticidally active compounds from the group of the neonicotinyls, where fatty alcohol ethoxylates of the formula (I) are employed in such amounts that, in commercial formulations, they are present in concentrations from 0.1 to 30% by weight, and the weight ratio of insecticidally active compound from the group of the neonicotinyls to fatty alcohol ethoxylate of the formula (I) is from 1:0.1 to 1:2.0.

2. Use according to Claim 1, **characterized in that** the active compound from the group of the neonicotinyls is imidacloprid, nitenpyram, acetamiprid, thiacloprid, thiamethoxam, clothianidin or dinotefuran.

3. Plant treatment compositions, **characterized in that** they comprise
- from 0.1 to 30% by weight of fatty alcohol ethoxylate of the formula (I), 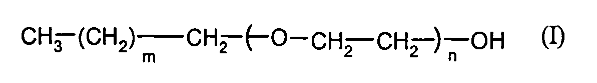 in which
m represents average values from 8.0 to 13.0 and
n represents average values from 6.0 to 17.0
- from 1 to 50% by weight of active compound from the group of the neonicotinyls,
- from 1 to 80% by weight of dimethyl sulfoxide, N-methylpyrrolidone and/or butyrolactone, and
- from 0 to 20% by weight of additives,
where the weight ratio of active compound to fatty alcohol ethoxylate of the formula (I) is from 1:0.1 to 1:2.0.

4. Plant treatment compositions according to Claim 3, **characterized in that** they comprise fatty alcohol ethoxylate of the formula (I) in which
m represents average values from 9.0 to 12.0 and
n represents average values from 7.0 to 9.0.

5. Plant treatment compositions according to Claim 3, **characterized in that** they comprise fatty alcohol ethoxylate of the formula (I)
in which
m represents the average value 10.5
n represents the average value 8.4.

6. Plant treatment compositions according to Claim 3, **characterized in that** they comprise, as neonicotinyl, imidacloprid, nitenpyram, acetamiprid, thiacloprid, thiamethoxam, clothianidin or dinotefuran.

7. Plant treatment compositions according to Claim 3, **characterized in that** they comprise, as additives, agrochemically active compounds, crystallization inhibitors, wetting agents, emulsifiers and/or water.

8. Plant treatment compositions according to Claim 3, **characterized in that** the content
- of fatty alcohol ethoxylate of the formula (I) is from 0.5 to 15% by weight,
- of active compound from the group of the neonicotinyls is from 2.5 to 30% by weight,
- of dimethyl sulfoxide, N-methylpyrrolidone and/or butyrolactone is from 30 to 80% by weight and
- of additives is from 0 to 15% by weight.

9. Ready-to-use plant treatment compositions, **characterized in that** they comprise between 0.01 and 0.2% by weight of
- fatty alcohol ethoxylate of the formula 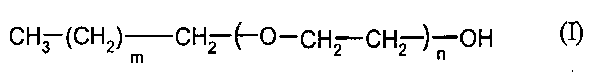 in which
m represents average values from 8.0 to 13.0 and
n represents average values from 6.0 to 17.0,
- from 0.001 to 0.03% by weight of active compound from the group of the neonicotinyls,
- from 0 to 50% by weight of dimethyl sulfoxide, N-methylpyrrolidone and/or butyrolactone and
- from 0 to 95% by weight of additives,
where the weight ratio of active compound to fatty alcohol ethoxylate of the formula (I) is from 1:0.1 to 1:2.0.

## Revendications

1. Utilisation d'éthoxylates d'alcool gras de la formule :
CH₃-(CH₂)ₘ-CH₂-(O-CH₂-CH₂-)ₙOH (I)
dans laquelle
m représente une valeur moyenne entre 8,0 et 13,0, et
n représente une valeur moyenne entre 6,0 et 17,0,
comme promoteur de la pénétration pour agents actifs insecticides du groupe du néonicotinyle, où les éthoxylate d'alcool gras de la formule (I) sont mis en oeuvre en une quantité telle qu'ils sont présents dans les formulations commerciales en des concentrations allant de 0,1 à 30% en poids et en ce que le rapport pondéral de l'agent actif insecticide du groupe du néonicotinyle à l'éthoxylate d'alcool gras de la formule (I) se situe dans l'intervalle allant de 1: 0, 1 à 1:2,0.

2. Utilisation selon la revendication 1, **caractérisée en ce que** l'agent actif du groupe du néonicotinyle consiste en l'imidaclopride, le nitenpyram, l'acétamipride, la thiaclopride, le thiaméthoxam, la clothianidine ou le dinotéfuran.

3. Agent de traitement de plantes, **caractérisé par** une teneur
- de 0,1 à 30% en poids d'éthoxylate d'alcool gras de la formule :
CH₃-(CH₂)ₘ-CH₂-(O-CH₂-CH₂-)ₙOH (I)
dans laquelle
m représente une valeur moyenne entre 8,0 et 13,0, et
n représente une valeur moyenne entre 6,0 et 17,0,
- de 1 à 50% en poids d'agent actif du groupe du néonicotinyle,
- de 1 à 80% en poids de diméthylsulfoxyde, de N-méthylpyrrolidone et/ou de butyrolactone, ainsi que
- de 0 à 20% en poids d'additifs,
où le rapport pondéral de l'agent actif à l'éthoxylate d'alcool gras de la formule (I) se situe dans l'intervalle allant de 1:0,1 à 1:2,0.

4. Agent de traitement de plantes selon la revendication 3, **caractérisé en ce qu'**un éthoxylate d'alcool gras de la formule (I) est présent, dans lequel :
m représente une valeur moyenne entre 9,0 et 12,0, et
n représente une valeur moyenne entre 7,0 et 9,0.

5. Agent de traitement de plantes selon la revendication 3, **caractérisé en ce qu'**un éthoxylate d'alcool gras de la formule (I) est présent, dans lequel :
m représente la valeur moyenne 10,5, et
n représente la valeur moyenne 8,4.

6. Agent de traitement de plantes selon la revendication 3, **caractérisé en ce que** l'imidaclopride, le nitenpyram, l'acétamipride, la thiaclopride, le thiaméthoxam, la clothianidine ou le dinotéfuran est présent comme néonicotinyle.

7. Agent de traitement de plantes selon la revendication 3, **caractérisé en ce qu'**un agent actif agrochimique, un inhibiteur de la cristallisation, un agent mouillant, un émulsionnant et/ou de l'eau sont présents comme additifs.

8. Agent de traitement de plantes selon la revendication 3, **caractérisé en ce** la teneur en
- éthoxylate d'alcool gras de la formule (I) se situe dans l'intervalle allant de 0,5 à 15% en poids,
- agent actif du groupe du néonicotinyle se situe dans l'intervalle allant de 2,5 à 30% en poids,
- diméthylsulfoxyde, N-méthylpyrrolidone et/ou butyrolactone se situe dans l'intervalle allant de 30% à 80% en poids, et
- additifs se situe dans l'intervalle allant de 0 à 15% en poids.

9. Agent de traitement de plantes prêt à l'emploi, **caractérisé par** une teneur
- de 0,01 à 0,2% en poids d'éthoxylate d'alcool gras de la formule :
CH₃-(CH₂)ₘ-CH₂-(O-CH₂-CH₂-)ₙOH (I)
dans laquelle
m représente une valeur moyenne entre 8,0 et 13,0, et
n représente une valeur moyenne entre 6,0 et 17,0,
- de 0,001 à 0,03% en poids d'agent actif du groupe du néonicotinyle,
- de 0 à 50% en poids de diméthylsulfoxyde, de N-méthylpyrrolidone et/ou de butyrolactone, ainsi que
- de 0 à 95% en poids d'additifs,
où le rapport pondéral de l'agent actif à l'éthoxylate d'alcool gras de la formule (I) se situe dans l'intervalle allant de 1:0,1 à 1:2,0.
